# EUROPEAN PATENT APPLICATION

(11) **EP 4 248 811 A2**
(43) Date of publication of application: **27.09.2023**
(21) Application number: 23158523.3
(22) Date of filing: 24.02.2023
(51) Int. Cl.: A47J 37/06, A47J 37/12, A47J 45/07

(54) **FRYING BASKET ASSEMBLY HAVING SEPARATED HANDLE, AND AIR FRYER**

(30) Priority: 05.03.2022 CN 202220464673 U; 03.08.2022 CN 202222029134 U
(71) Applicant: Ningbo Careline Electric Appliance Co., Ltd., Ningbo, Zhejiang 315000 (CN)
(72) Inventor: ZHANG, Yichi, NINGBO, 315000 (CN); PAN, Huayuan, NINGBO, 315000 (CN); BAI, Rongjie, NINGBO, 315000 (CN); HUANG, Chengzhou, NINGBO, 315000 (CN)
(74) Representative: Locas, Davide

(57) **Abstract**

A frying basket assembly (20) having a separated handle (1) and an air fryer are disclosed. The frying basket assembly (20) comprises a handle (1) and a frying basket (2), the handle (1) comprises a mounting portion (3), the frying basket (2) is provided thereon with a mounting groove (5) corresponding to the mounting portion (3), one of the mounting portion (5) and the mounting groove (3) is provided with a hook (7), the other is provided with a snapping position (10) corresponding to the hook (7), the hook (7) is connected with an elastic member so as to make the hook (7) move towards a direction of the snapping position (10), and when the handle (1) is mounted on the frying basket (2) and reaches a final position, the hook (7) is clamped into the snapping position (10), to non-detachably fix the handle (1) on the frying basket (2). A frying basket (2) having a separated handle (1) and an air fryer are further disclosed, comprising a frying basket body (100) and a handle portion (200), wherein the frying basket body(100) and the handle portion (200) are detachably connected to each other, and there is a space capable of accommodating the handle portion (200) inside the frying basket body (100), the frying basket body (100) is provided thereon with a mounting port (900), one end of the handle portion (200) is provided with a mounting base (2100), and the mounting bas (2100) fits and is embedded into the mounting port (900).

## Description

### Cross-reference to Related Application

The present disclosure claims the priority to the Chinese patent application with the filing No. 2022204646732, filed on March 5, 2022 with the Chinese Patent Office, and entitled "Frying Basket Assembly Having Separated Handle and Air Fryer", and the Chinese patent application with the filing No. 2022220291349, filed on August 3, 2022 with the Chinese Patent Office, and entitled "Frying Basket Having Separated Handle and Air Fryer".

### Technical Field

The present disclosure relates to the technical field of kitchen appliances and cooking appliances, specifically to an air fryer, particularly to a frying basket assembly having a separated handle and an air fryer.

### Background Art

Air fryer is a cooking appliance which is very popular and frequently used by people at present. Existing air fryers generally include a pot body having a cooking cavity and a frying basket that can be taken out and placed in the cooking cavity. In order to make it convenient to put the frying basket in the cooking cavity or take the frying basket out from the cooking cavity, a handle is usually provided at one side of the frying basket. In the prior art, the handle on the frying basket is usually fixed on the frying basket in a locking manner, or the handle is directly molded with the frying basket into one piece, then during the transportation of the product, the protruding handle will affect the overall packing efficiency of the air fryer, and meanwhile also require a larger packaging box and more package materials, thus increasing the packaging and transportation costs of the air fryer, and leading to lower practicality.

### Summary

In a first aspect, a frying basket assembly having a separated handle is provided, wherein the frying basket assembly includes a handle and a frying basket, the handle includes a mounting portion, the frying basket is provided thereon with a mounting groove corresponding to the mounting portion, one of the mounting portion and the mounting groove is provided with a hook, the other is provided with a snapping position corresponding to the hook, the hook is connected with an elastic member so as to make the hook move towards a direction of the snapping position, and when the handle is mounted on the frying basket and reaches a final position, the hook is clamped into the snapping position, to non-detachably fix the handle on the frying basket.

In a second aspect, a frying basket having a separated handle, including a frying basket body and a handle portion, wherein the frying basket body and the handle portion are detachably connected to each other, and there is a space capable of accommodating the handle portion inside the frying basket body, the frying basket body is provided thereon with a mounting port, one end of the handle portion is provided with a mounting base, and the mounting base fits and is embedded into the mounting port.

In a third aspect, an air fryer is provided, including a fryer body and the frying basket assembly as in the first aspect in the above or the frying basket as in the second aspect in the above, the frying basket assembly or the frying basket entering or exiting the fryer body in a push-and-pull manner.

### Brief Description of Drawings

In order to more clearly illustrate the technical solutions in specific embodiments of the present disclosure or in the prior art, accompanying drawings which need to be used in the description of the specific embodiments or the prior art will be introduced briefly below, and apparently, the accompanying drawings in the description below merely show some embodiments of the present disclosure, and those ordinarily skilled in the art still could obtain other accompanying drawings in light of these accompanying drawings without any creative effort.

FIG. 1 is a structural schematic diagram of a handle in an embodiment of the present disclosure;
FIG. 2 is an exploded diagram of the handle in an embodiment of the present disclosure;
FIG. 3 is a sectional diagram of the handle in an embodiment of the present disclosure;
FIG. 4 is a mounting schematic diagram of the handle in an embodiment of the present disclosure;
FIG. 5 is a structural schematic diagram of a frying basket assembly in an embodiment of the present disclosure;
FIG. 6 is a sectional diagram of the frying basket assembly in an embodiment of the present disclosure;
FIG. 7 is an enlarged diagram of a part A in FIG. 6;
FIG. 8 is an exploded diagram of the frying basket and the handle in an embodiment of the present disclosure;
FIG. 9 is an enlarged diagram of a part B in FIG. 8;
FIG. 10 is a structural schematic diagram of an air fryer in an embodiment of the present disclosure;
FIG. 11 is a front sectional structural diagram of the frying basket in the present disclosure;
FIG. 12 is an enlarged structural diagram of a part A in FIG. 11;
FIG. 13 is a structural diagram of a handle portion in an exploded state in the present disclosure;
FIG. 14 is a sectional structural diagram of the handle portion in the present disclosure;
FIG. 15 is a schematic diagram of an installation process of the handle portion in the present disclosure;
FIG. 16 is a schematic diagram of a disassembly process of the handle portion in the present disclosure;
FIG. 17 is an enlarged structural diagram of a part B in FIG. 16; and
FIG. 18 is a packaging schematic diagram of the air fryer in the present disclosure.

Reference signs: 1. handle; 2. frying basket; 3. mounting portion; 4. accommodation cavity; 5. mounting groove; 6. spring; 7. hook; 8. pin shaft; 9. pin hole; 10. snapping position; 11. guiding groove; 12. protrusion; 13. limiting groove; 14. guiding slope; 15. step surface; 16. blocking portion; 17. positioning groove; 18. positioning post; 19. limiting plate; 20. frying basket assembly; 21. fryer body; 100. frying basket body; 1100. pot body; 1200. panel; 200. handle portion; 2100. mounting base; 2300. limiting protrusion; 2400. through-hole; 300. plug; 400. elastic member; 500. rotating shaft; 700. buckling plate; 800. snapping port; 900. mounting port; 1000. auxiliary tool.

### Detailed Description of Embodiments

The present disclosure provides a frying basket assembly having a separated handle and an air fryer, so as to solve the problems that the existing air fryers have high packaging and transportation costs.

In order to solve the above technical problems, the present disclosure provides a frying basket assembly having a separated handle, wherein the frying basket assembly includes a handle and a frying basket, the handle includes a mounting portion, the frying basket is provided thereon with a mounting groove corresponding to the mounting portion, one of the mounting portion and the mounting groove is provided with a hook, the other is provided with a snapping position corresponding to the hook, the hook is connected with an elastic member so as to make the hook move towards a direction of the snapping position, and when the handle is mounted on the frying basket and reaches a final position, the hook is clamped into the snapping position, to non-detachably fix the handle on the frying basket.

In an optional embodiment, the mounting portion has an accommodation cavity, the hook has a connecting end and a free end, the connecting end is hinged in the accommodation cavity, and the free end extends out of the accommodation cavity to face the snapping position. In the present embodiment, the hook is provided in the accommodation cavity of the mounting portion, there is a relatively big space inside the accommodation cavity, the hook can freely move in the accommodation cavity, so that the engagement between the hook and the snapping position can be better realized.

In an optional embodiment, the elastic member is a spring, and the spring has a first end abutting against an inner wall of the accommodation cavity, and a second end abutting against the hook. In the present embodiment, the spring is used as the elastic member, and the spring can better cooperate with the hook, to make the hook to be clamped into the snapping position.

In an optional embodiment, a guiding groove is provided in the accommodation cavity, and the first end of the spring is limited in the guiding groove. The arrangement of the guiding groove makes a movement process of the spring smoother and avoids bending.

In an optional embodiment, the mounting groove is provided with a guiding slope, and when the mounting portion is vertically slid, the free end of the hook is gradually received in the accommodation cavity under the extrusion of the guiding slope. In the present embodiment, the user can make the free end of the hook to be received in the accommodation cavity without intentionally applying a force, so that the mounting of the handle is relatively labor-saving.

In an optional embodiment, the mounting groove is a U-shaped groove, and the mounting portion is inserted from a groove opening of the U-shaped groove, and slid downwards into the U-shaped groove. By sliding the mounting portion into the U-shaped groove from top to bottom, the sliding of the mounting portion is allowed to be relatively smooth and labor-saving.

In an optional embodiment, a step surface is provided at the groove opening of the U-shaped groove, the top end of the mounting portion is provided with a blocking portion, and when the handle is mounted on the frying basket and reaches a final position, the blocking portion covers the step surface. By blocking the groove opening of the U-shaped groove with the blocking portion, the frying basket assembly is allowed to have a better appearance.

In an optional embodiment, two sides of the mounting portion are each provided with a protrusion, the mounting groove is provided with corresponding limiting grooves, and the protrusions are limited in the respective limiting grooves to prevent the mounting portion from sliding out of the mounting groove.

In an optional embodiment, one of the bottom end of the mounting groove and the bottom end of the mounting portion is provided with a positioning groove, and the other is provided with a corresponding positioning post, and when the handle is mounted on the frying basket and reaches the final position, the positioning post is clamped into the positioning groove. The positioning post is clamped into the positioning groove, so that the mounting portion cannot come out from the mounting groove, further improving the mounting fastness of the handle.

In an optional embodiment, the free end of the hook has two hook tines, and when the handle is mounted on the frying basket and reaches the final position, the two hook tines are clamped into the snapping position. In the present embodiment, the hook has two hook tines, so that the hook can be better clamped with the snapping position, thus avoiding inclination and shaking of the handle.

In an optional embodiment, inner ends of the two hook tines are pointed; one side of the snapping position facing the hook is of a barb structure, and when the handle is mounted on the frying basket and reaches the final position, the two hook tines fasten the snapping position. In the present embodiment, the snap-fit between the hook tines and the barb further improves the clamping degree between the hook and the snapping position, and avoids separation of the two to affect the mounting of the handle.

The present disclosure further provides an air fryer, including a fryer body and a handle mounting structure of the frying basket assembly as described in any one in the first aspect, and the frying basket assembly enters or exits the fryer body in a push-and-pull manner.

The present disclosure further provides a frying basket having a separated handle and an air fryer, which can solve the problems that the existing frying basket and handle cannot be disassembled or transported conveniently.

In order to achieve the above objective, the present disclosure provides the following technical solution: a frying basket having a separated handle, including a frying basket body and a handle portion, wherein the frying basket body and the handle portion are detachably connected to each other, and there is a space capable of accommodating the handle portion inside the frying basket body, the frying basket body is provided thereon with a mounting port, one end of the handle portion is provided with a mounting base, and the mounting base fits and is embedded into the mounting port. The detachable connection between the frying basket body and the handle portion can be realized by providing the mounting base and the mounting port, and the handle portion can be placed inside the frying basket body after being detached, then the volume of the exterior package during the transportation is reduced, and the handle portion also can be protected from collision.

In an optional embodiment, the mounting base is provided thereon with a snap-fit structure for locking with the frying basket body in a snap-fit manner when the mounting base fits and is embedded into the mounting port. The fixed connection between the frying basket body and the handle portion can be realized by means of the snap-fit structure, and the condition that the frying basket body and the handle portion are separated on their own will not occur during use.

In an optional embodiment, the snap-fit structure includes a hook, the hook has one end hinged to the mounting base, the other end being a movable end, the elastic member is mounted between the movable end and the mounting base, the mounting port is provided therein with a snapping port, and the movable end of the hook extends out under the action of the elastic member to be clamped and locked with the snapping port. By providing the movable hook, it can be realized that the frying basket body and the handle portion also can be unlocked after being clamped, thus realizing repeated assembly and disassembly of the frying basket body and the handle portion.

In an optional embodiment, a buckling plate inclined towards the hook is disposed inside the mounting port, the snapping port is formed between an inclined extending end of the buckling plate and the frying basket body, and the buckling plate can press the hook to make the hook move, so that the mounting base, when being inserted into the mounting port, can be automatically buckled with the snapping port, which is quite convenient.

In an optional embodiment, the mounting base is provided with a through-hole, and a space for inserting and moving an auxiliary tool is provided between the through-hole and the movable end of the hook. The auxiliary tool, when extending into the mounting base, can toggle the movable end of the hook, so that the hook is separated from the snapping port, thus the frying basket body and the handle portion can be disassembled.

In an optional embodiment, the through-hole is blocked by a removable plug, which can prevent greasy dirt from entering the interior of the mounting base.

In an optional embodiment, the mounting port is provided at one side edge of the frying basket body, and the mounting base of the handle portion is slid into the mounting port from top to bottom or from bottom to top. Such an arrangement makes the assembly of the frying basket body and the handle portion more convenient.

In an optional embodiment, limiting grooves are provided on side walls at two sides of the mounting port, and limiting protrusions corresponding to the limiting grooves are provided at two sides of the mounting base;
alternatively, the two side walls of the mounting port are each provided with the limiting protrusion, and the two sides of the mounting base are each provided with the limiting groove corresponding to the limiting protrusion. When the mounting base is slid into the mounting port, the limiting protrusion is clamped into respective limiting groove. The limiting protrusions and the limiting grooves can play a guiding role when the mounting base is inserted into the mounting port, and also can limit the handle portion in a horizontal direction, to prevent the handle portion from sliding out from the mounting port in the horizontal direction.

In an optional embodiment, the frying basket body includes a pot body and a panel provided at one side of the pot body, the mounting port is provided on the panel, and a space capable of accommodating the handle portion is provided in the pot body. By connecting and mounting the handle portion through the panel, the arrangement of the mounting port is more flexible, and an inner space of the pot body also can be effectively utilized to protect the handle portion during transportation, which is relatively convenient.

The present disclosure further provides an air fryer, including a body and the frying basket as described in the first aspect, wherein a cooking cavity is provided in the body, and the frying basket is drawn out from a side wall of the body and placed into the cooking cavity. For such a drawer-type air fryer, it is particularly necessary to disassemble the handle portion and place the handle portion separately during the transportation.

Compared with the prior art, the beneficial effects of the present disclosure are as follows.

In the present disclosure, by means of the structural design, one of the handle and the frying basket is provided with the hook, and the other is provided with the snapping position, and the hook is clamped into the snapping position by means of the elastic force of the elastic member, thus realizing the fixed mounting of the handle. As the frying basket and the handle are of a split structure, during the packaging and transportation process, the handle can be placed in the frying basket assembly or in the gap of the packaging box, thus saving the packaging and transportation costs. When using, the user can firmly assemble the handle on the frying basket just by one simple "insertion" action, which assembly is quick and convenient, and the handle cannot be disassembled after the assembly, thus having strong practicality.

By making the frying basket and the handle in a split structure and providing the same with a detachable mounting structure, on the one hand, the handle can be directly placed in the frying basket during transportation without occupying the space of packaging box and without specifically designing the packaging material, and on the other hand, the assembly, maintenance, and cleaning are convenient; and
the hook is provided inside the handle, the hook has one end hinged to the handle, and the other end being a movable end, then the hook can be hooked with the snapping port, so as to fix the handle on the frying basket in a snap-fit manner, which operation is convenient and reliable.

In order to make the objectives, technical solutions, and advantages of the embodiments of the present disclosure more clear, the technical solutions in the embodiments of the present disclosure will be described clearly and completely below in conjunction with the drawings in the embodiments of the present disclosure, and obviously, the embodiments described are merely some but not all embodiments of the present disclosure. Generally, components in the embodiments of the present disclosure described and shown in the accompanying drawings herein may be arranged and designed in various different configurations.

Therefore, the detailed description below of the embodiments of the present disclosure provided in the accompanying drawings is not intended to limit the scope of the present disclosure to be protected, but merely represents chosen embodiments of the present disclosure. Based on the embodiments of the present disclosure, all of other embodiments, obtained by a person ordinarily skilled in the art without any creative effort, shall fall within the scope of protection of the present disclosure.

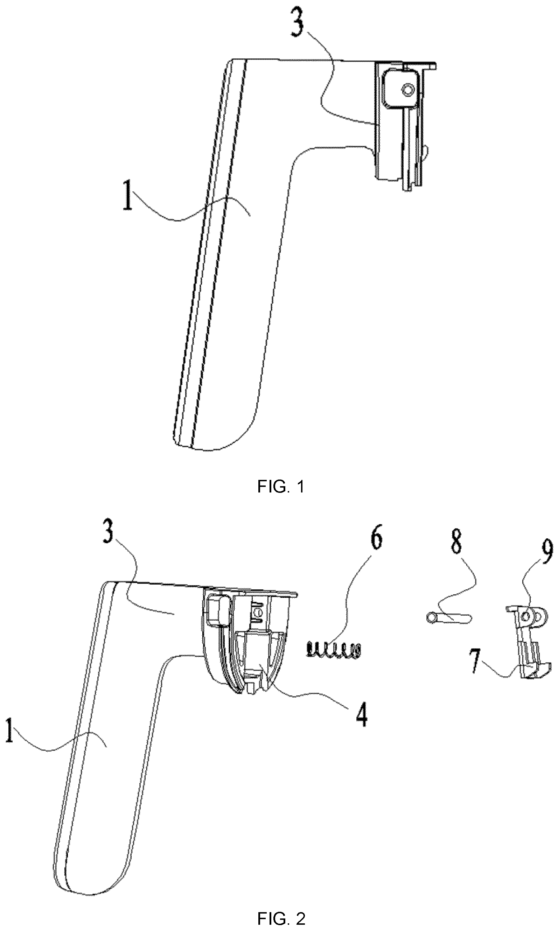

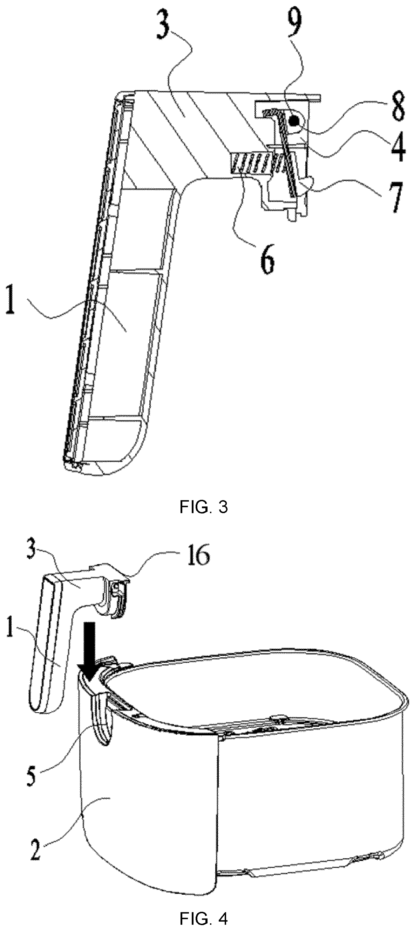

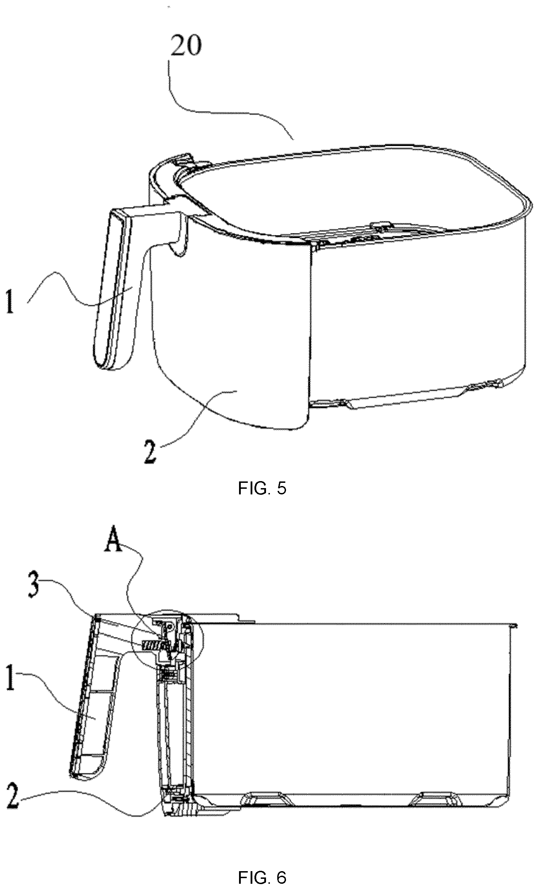

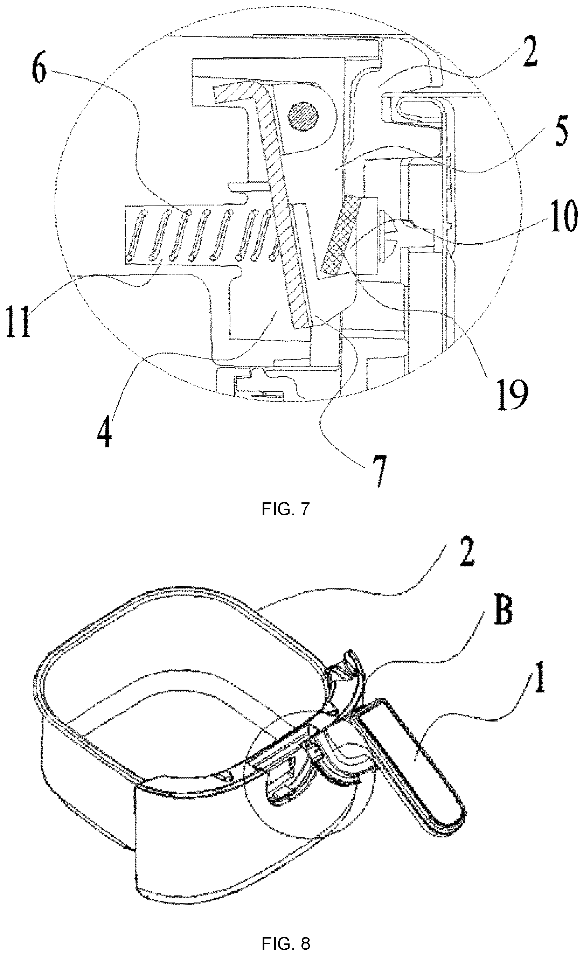

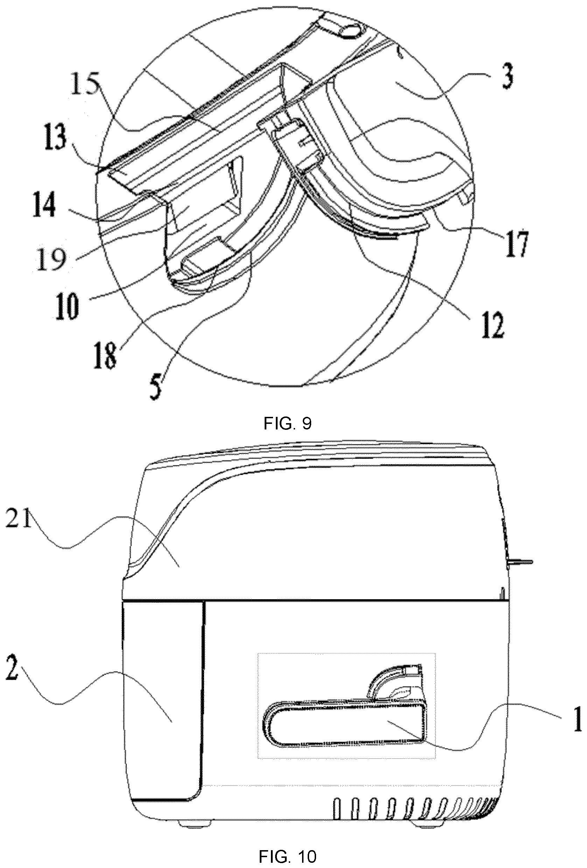

Referring to FIG. 1 to FIG. 10, the present disclosure shows a frying basket assembly having a separated handle, wherein the frying basket assembly 20 includes a handle 1 and a frying basket 2, and the handle 1 and the frying basket 2 are of a split structure. When using the handle 1, the user fixes the handle 1 on the frying basket 2. Specifically, the handle 1 includes a mounting portion 3 and a gripping portion, the frying basket 2 is provided thereon with a mounting groove 5 corresponding to the mounting portion 3, the mounting groove 5 has a shape adapted to that of the mounting portion 3, the mounting groove 5 is vertically provided, the mounting groove 5 has an opening for the mounting portion 3 to be inserted therein, this opening may be located at the top of the mounting groove 5, or may be located at the bottom of mounting groove 5, that is, the mounting portion 3 can be slid into the mounting groove 5 from top to bottom, or the mounting portion 3 can be slid into the mounting groove 5 from bottom to top. One of the mounting portion 3 and the mounting groove 5 is provided with a hook 7, and the hook 7 is connected with an elastic member; the other of the mounting portion 3 and the mounting groove 5 is provided with a snapping position 10 corresponding to the hook 7. When the mounting portion 3 or the mounting groove 5 is vertically slid, the mounting portion 3 fits with the mounting groove 5, the hook 7 is pressed by the mounting groove 5, the hook is moved in a direction away from the mounting groove, and the elastic member is in a compressed state. When the handle 1 is mounted on the frying basket 2 and reaches a final position, the hook 7 is moved towards a direction of the snapping position 10 under the action of the elastic member, the hook 7 is clamped into the snapping position 10, and the mounting portion 2 is embedded into the mounting groove 5, to non-detachably fix the handle 1 on the frying basket 2. In the present embodiment, the elastic member can adopt various existing technologies, and can include various elastic members such as a compression spring, a torsional spring, and a blade spring. It should be noted that, "the hook 7 is connected with an elastic member" means that the elastic member can apply an acting force on the hook 7 to enable the hook 7 to move towards the direction of the snapping position 10, and the hook 7 may or may not be directly connected to the elastic member, as long as the elastic member can transfer the acting force.

In the present disclosure, by means of the structural design, one of the handle 1 and the frying basket 2 is provided with the elastic member and the hook 7, and the other is provided with the snapping position 10, and the hook 7 is clamped into the snapping position 10 by means of the elastic force of the elastic member, thus realizing the fixed installation of the handle 1. As the frying basket 2 and the handle 1 are of a split structure, during the packaging and transportation process, the handle 1 can be placed in the frying basket 2 assembly or in a gap of the packaging box, thus saving the packaging and transportation costs. When using, the user can firmly assemble the handle 1 on the frying basket 2 just by one simple "insertion" action, which assembly is quick and convenient, and the handle cannot be disassembled after the assembly, thus having strong practicality.

In an optional embodiment, the mounting portion 3 has an accommodation cavity 4, the hook 7 has a connecting end and a free end, the connecting end is hinged in the accommodation cavity 4, and the free end extends out of the accommodation cavity 4 to face the snapping position 10. Specifically, the elastic member and the hook 7 are mounted in the accommodation cavity 4 of the handle 1, the connecting end of the hook 7 has a pin hole 9, and the hook 7 is mounted in the accommodation cavity 4 after a pin shaft 8 passes through the pin hole 9; and the mounting groove 5 is provided on a side wall of the frying basket 2. When the handle 1 is slid, the hook 7 is pressed by the mounting groove 5, the free end of the hook 7 is retracted into the accommodation cavity 4, and the elastic member is in a compressed state. When the mounting portion 3 is slid into place, the hook 7 loses the pressing force, and under the action of the elastic member, the free end of the hook 7 extends out of the accommodation cavity 4 and is clamped into the snapping position 10, thus realizing the mounting of the handle 1. In the present embodiment, the hook 7 is disposed in the accommodation cavity 4 of the mounting portion 3, there is a relatively large space inside the accommodation cavity 4, and the hook 7 can move freely in the accommodation cavity 4, so that the engagement between the hook 7 and the snapping position 10 can be better realized.

In an optional embodiment, the elastic member is a spring 6, and the spring 6 has a first end abutting against an inner wall of the accommodation cavity 4, and a second end abutting against the hook 7. Specifically, the spring 6 is transversely disposed in the accommodation cavity 4, and the spring 6 has one end abutting against a cavity wall of the accommodation cavity 4, and the other end abutting against a middle portion of the hook 7. The spring 6 acts on the hook 7, so that a hooking portion of the hook 7 always has a tendency to extend out of the accommodation cavity 4. In the present embodiment, the spring 6 is used as the elastic member, and the spring 6 can better cooperate with the hook 7, to make the hook 7 to be clamped into the snapping position 10.

In an optional embodiment, a guiding groove 11 is provided in the accommodation cavity 4, and the first end of the spring 6 is limited in the guiding groove 11. Specifically, the guiding groove 11 extends from the cavity wall of the accommodation cavity 4 towards the direction of the hook 7, the spring 6 is embedded in the guiding groove 11, and the hook 7 compresses the spring 6 along the direction of the guiding groove 11. In the present embodiment, the arrangement of the guiding groove 11 makes a movement process of the spring 6 smoother and avoids bending. Further, the hook 7 is provided thereon with a guiding post at a position corresponding to the guiding groove 11, the second end of the spring 6 is sleeved on the guiding post, and the guiding post is embedded into the guiding groove 11 during the sliding. In the present embodiment, the arrangement of the guiding post makes the spring 6 to be fixed more firmly, and the spring 6 can better act on the hook 7.

In an optional embodiment, the mounting groove 5 is provided with a guiding slope 14, and when the mounting portion 3 is vertically slid, the free end of the hook 7 is gradually received in the accommodation cavity 4 under the extrusion of the guiding slope 14. When the mounting portion 3 is just inserted into the mounting groove 5, there is no need to intentionally apply a force to make the free end of the hook 7 to be received in the accommodation cavity 4, when the mounting portion 3 is slid to the guiding slope 14, the free end of the hook 7 is pressed by the guiding slope 14 and is gradually retracted into the accommodation cavity 4, and when the mounting portion 3 is slid into place, the hook 7 loses the pressing force, extends out of the accommodation cavity 4, and is clamped into the snapping position 10. By providing the guiding slope 14, the user can make the free end of the hook 7 to be received in the accommodation cavity 4 without intentionally applying a force, so that the mounting of the handle 1 is relatively labor-saving.

In an optional embodiment, the mounting groove 5 is a U-shaped groove, and the mounting portion 3 is inserted from a groove opening of the U-shaped groove, and slid downwards into the U-shaped groove. Specifically, a top edge of the frying basket 2 is provided with a notch to form the groove opening of the U-shaped groove. An area of the U-shaped groove is gradually decreased from top to bottom. As the shape of the mounting portion 3 is adapted to the shape of the mounting groove 5, the mounting portion 3 is gradually decreased from a top end to a bottom end. When the mounting portion 3 is inserted from the groove opening of the U-shaped groove, the bottom end of the mounting portion 3 first enters the top end of the U-shaped groove, and when the mounting portion 3 is slid into place, the top end of the mounting portion 3 is embedded into the top end of the U-shaped groove, thus making the sliding of the mounting portion 3 relatively smooth and labor-saving.

In an optional embodiment, a step surface 15 is provided at the groove opening of the U-shaped groove, the top end of the mounting portion 3 is provided with a blocking portion 16, and when the mounting portion 3 is slid into place, the blocking portion 16 covers the step surface 15. Specifically, the blocking portion 16 is formed by the mounting portion 3 extending toward a direction of the mounting groove 5, and the blocking portion 16 is a horizontal plane. In the present embodiment, by blocking the groove opening of the U-shaped groove with the blocking portion 16, the frying basket assembly 20 is allowed to have a good appearance.

In an optional embodiment, two sides of the mounting portion 3 are each provided with a protrusion 12, the mounting groove 5 is provided with corresponding limiting grooves 13, and when the mounting portion 3 is slid, the protrusions 12 are limited in the respective limiting grooves 13 to prevent the mounting portion 3 from sliding out of the mounting groove 5. Specifically, positions of two sides of the mounting portion 3 in contact with the mounting groove 5 extend outwards to form the protrusions 12, and groove walls at two sides of the mounting groove 5 are recessed outwards to form the limiting grooves 13. When the mounting portion 3 is inserted into the mounting groove 5, the protrusions 12 are embedded into the limiting grooves 13, the mounting portion 3 slides along the limiting grooves 13, and the mounting portion 3 will not come out.

In an optional embodiment, one of the bottom end of the mounting groove 5 and the bottom end of the mounting portion 3 is provided with a positioning groove 17, and the other is provided with a corresponding positioning post 18, and when the handle 1 is mounted on the frying basket 2 and reaches the final position, the positioning post 18 is clamped into the positioning groove 17. Specifically, the bottom end of the mounting portion 3 is recessed upwards to form the positioning groove 17, and the bottom end of the mounting groove 5 is raised upwards to form the positioning post 18. The positioning post 18 is clamped into the positioning groove 17, so that the mounting portion 3 cannot come out from the mounting groove 5, further improving the mounting fastness of the handle 1.

In an optional embodiment, the free end of the hook 7 has two hook tines, and when the handle 1 is mounted on the frying basket 2 and reaches the final position, the two hook tines are clamped into the snapping position 10. In the present embodiment, the hook 7 has two hook tines, so that the hook 7 can be better clamped with the snapping position, thus avoiding inclination and shaking of the handle 1.

In an optional embodiment, inner ends of the two hook tines are pointed; one side of the snapping position 10 facing the hook 7 is of a barb structure, and when the handle 1 is mounted on the frying basket 2 and reaches the final position, the two hook tines fasten the snapping position 10. Specifically, the hook tines are each composed of a vertical section and an inclined section, wherein the vertical section is connected to the spring and is inclined towards the direction of the snapping position 10, the inclined section is inclined upwards, the vertical section and the inclined section form an L-shaped structure of which an inner end is a sharp angle, and the sharp angle is an acute angle. The snapping position 10 is provided therein with a clamping plate 19 at a position corresponding to the hook tine, the clamping plate 19 is matched with the inclined section of the hook tine, the clamping plate 19 is made of a plastic material and has a slight elasticity, and the clamping plate 19 enables the snapping position 10 to be of a barb structure. When the handle 1 is mounted on the frying basket 2 and reaches the final position, the clamping plate 19 tightly presses the inclined section of the hook tine, so that the hook 7 will not come out from the snapping position 10, thus further improving the fastness of the handle 1 after being mounted. In addition, an end portion of the inclined section is usually provided in an arc shape for smooth sliding.

The present disclosure discloses an air fryer, including a fryer body 21 and a handle mounting structure of the frying basket assembly as described in the first aspect in the above, wherein the frying basket assembly 20 enters or exits the fryer body 21 in a push-and-pull manner. As containing the handle mounting structure of the frying basket assembly in the first aspect in the above, the present embodiment has the beneficial effects in the first aspect in the above.

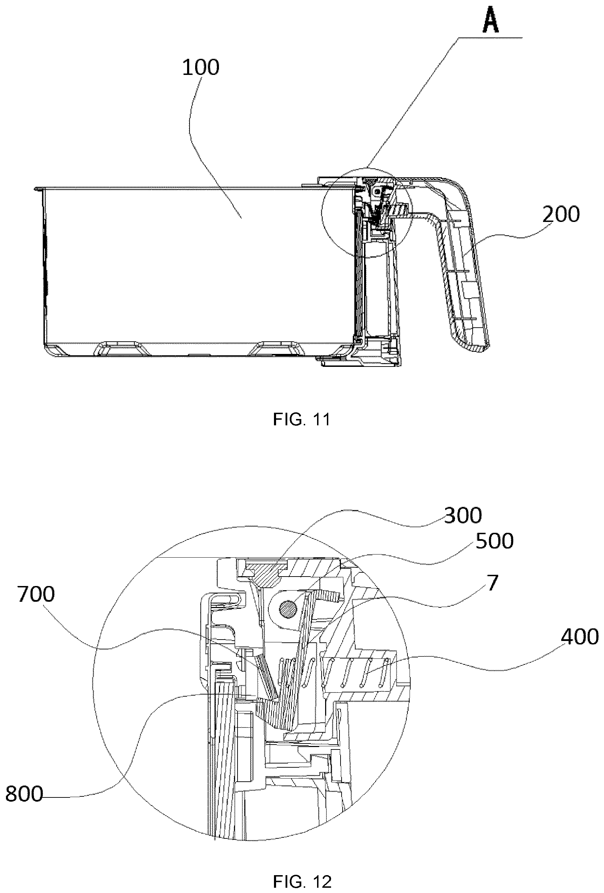

As shown in FIGS. 11-18, in order to be capable of solving the problems that the existing frying basket and handle cannot be disassembled or transported conveniently, the present disclosure further provides the following technical solutions: a frying basket having a separated handle, including a frying basket body 100 and a handle portion 200, the frying basket body 100 and the handle portion 200 are detachably connected to each other, and there is a space capable of accommodating the handle portion 200 inside the frying basket body 100, the frying basket body 100 is provided thereon with a mounting port 900, and one end of the handle portion 200 is provided with a mounting base 2100, the mounting base 2100 fits and is embedded into the mounting port 900, the detachable connection between the frying basket body 100 and the handle portion 200 can be realized by providing the mounting base 2100 and the mounting port 900, and the handle portion 200 can be placed inside the frying basket body 100 after being detached, then the volume of the exterior package during the transportation is reduced, and the handle portion 200 also may be protected from collision.

Specifically, the mounting base 2100 is a part of the handle portion 200, actually a part of an end portion of the handle portion 200, and has a shape corresponding to that of the mounting port 900. The shape of the mounting base is not limited, as long as the mounting base 2100 can be inserted into the mounting port 900 to realize the connection between the frying basket body 100 and the handle portion 200. The frying basket body and the handle portion can be connected in a variety of connection modes, such as connecting by means of a fastener, or quick snapping and fixing by a movable snap-fit structure, as long as the frying basket body 100 and the handle portion 200 can be disassembled during the transportation. However, the length of the handle portion 200 cannot be too long, because the handle portion cannot be put into the space inside the frying basket body 100 if it is too long.

In the present embodiment, the mounting base 2100 is provided thereon with a snap-fit structure for locking with the frying basket body 100 in a snap-fit manner when the mounting base 2100 fits and is embedded into the mounting port 900. The fixed connection between the frying basket body 100 and the handle portion 200 can be realized by means of the snap-fit structure, and the condition that the frying basket body 100 and the handle portion 200 are separated on their own will not occur during use. The structure of the snap-fit structure can be movable or fixed, and interference fit between the snap-fit structure and a corresponding clamping position inside the mounting port 900 can be realized by an external force, thus firm connection fit between the frying basket body 100 and the handle portion 200 can be achieved.

As an example of the above snap-fit structure, as shown in FIGS. 12-14, the snap-fit structure includes a hook 7, the hook 7 has one end hinged to the mounting base 2100, the other end being a movable end, the elastic member 400 is mounted between the movable end and the mounting base 2100, the mounting port 900 is provided therein with a snapping port 800, and the movable end of the hook 7 extends out under the action of the elastic member 400 to be clamped and locked with the snapping port 800. By providing the movable hook 7, it can be realized that the frying basket body 100 and the handle portion 200 also can be unlocked after being clamped, thus realizing repeated assembly and disassembly of the frying basket body 100 and the handle portion 200. The movable end of the hook 7 is hook-shaped, and it will not rotate without an external force after being hooked to the snapping port 800, thus the mounting base 2100 cannot come out from the mounting port 900, wherein one end of the hook 7 is hinged to the mounting base 2100 through a rotating shaft 500, and one end of the rotating shaft 500 is provided with a limiting platform to axially limit the end of the rotating shaft 500, and prevent the rotating shaft 500 from escaping.

In addition, a buckling plate 700 inclined towards the hook 7 is disposed inside the mounting port 900, the snapping port 800 is formed between an inclined extending end of the buckling plate 700 and the frying basket body 100, and the buckling plate 700 can press the hook 7 to make the hook move, so that the mounting base 2100, when being inserted into the mounting port 900, can be automatically buckled with the snapping port 800, which is quite convenient. The buckling plate 700 is a part of the mounting port 900 and is integrally molded. Such inverted buckling structure is conducive to the movable end of the hook 7 to hook a lower edge of the buckling plate 700.

In order to allow the frying basket body 100 and the handle portion 200 to be disassembled after being assembled, the mounting base 2100 is provided with a through-hole 2400, and a space for inserting and moving an auxiliary tool 1000 is provided between the through-hole 2400 and the movable end of the hook 7. The auxiliary tool 1000, when extending into the mounting base 2100, can toggle the movable end of the hook 7, so that the hook 7 is separated from the snapping port 800, thus the frying basket body 100 and the handle portion 200 can be disassembled. The auxiliary tool 1000 may be various tools which can be found in existing homes, for example, a screwdriver, a chopstick, and an iron wire, all of which can be used as the auxiliary tool 1000, or the auxiliary tool 1000 may be a special tool for the air fryer. The special tool is shaped as a long rod and can be inserted into the mounting base 2100 through the through-hole 2400 without any obstruction during the whole insertion process, so that the hook 7 is swung and separated from the snapping port 800, then the frying basket body 100 and the handle portion 200 can be separated. When the through-hole 2400 is not in use, the through-hole 2400 is blocked by a removable plug 300, which can prevent greasy dirt from entering the interior of the mounting base 2100.

In the present embodiment, the mounting port 900 is provided at one side edge of the frying basket body 100, and the mounting base 2100 of the handle portion 200 is slid into the mounting port 900 from top to bottom or from bottom to top. Such an arrangement makes the assembly of the frying basket body 100 and the handle portion 200 more convenient. The mounting port 900 may be provided in an upper middle portion of the frying basket body 100, and also may be provided on a lower side of the frying basket body 100, as needed.

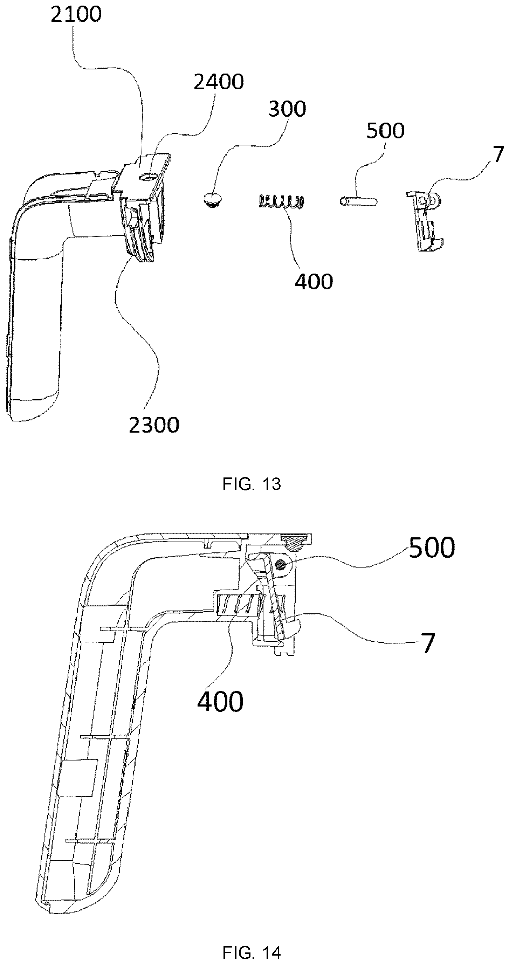

In the present embodiment, as shown in FIG. 13, the limiting grooves are provided on side walls at two sides of the mounting port 900, and limiting protrusions 2300 corresponding to the limiting grooves are provided at two sides of the mounting base 2100;
alternatively, the two side walls of the mounting port 900 are each provided with the limiting protrusion 2300, and the two sides of the mounting base 2100 are each provided with the limiting groove corresponding to the limiting protrusion 2300. When the mounting base 2100 is slid into the mounting port 900, the limiting protrusion 2300 is clamped into respective limiting groove. The limiting protrusions 2300 and the limiting grooves can play a guiding role when the mounting base 2100 is inserted into the mounting port 900, and also can limit the handle portion 200 in a horizontal direction to prevent the handle portion 200 from sliding out from the mounting port 900 in the horizontal direction.

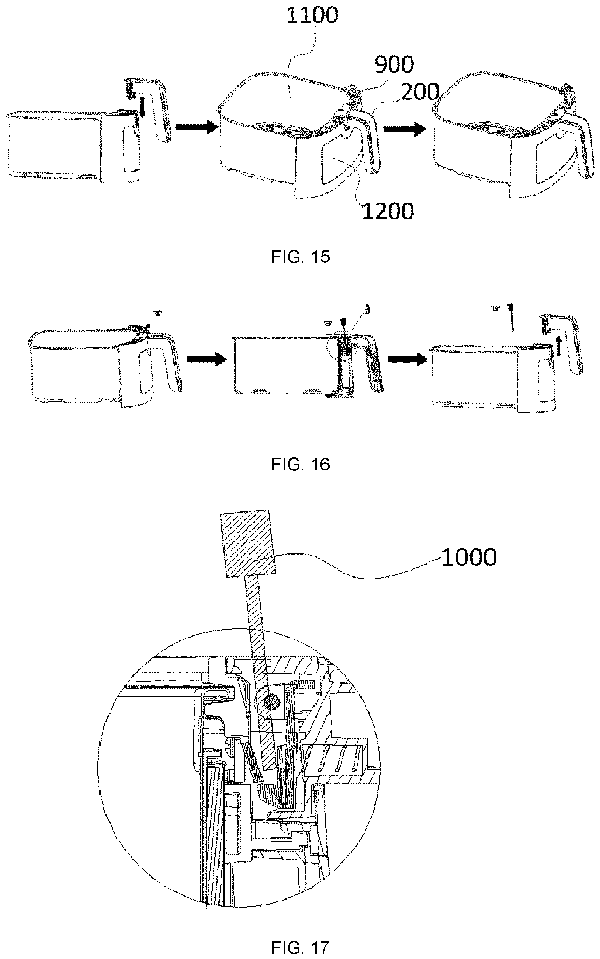

In the present embodiment, as shown in FIG. 15, the frying basket body 100 includes a pot body 1100 and a panel 1200 provided at one side of the pot body 1100, the mounting port 900 is provided on the panel 1200, and a space capable of accommodating the handle portion 200 is provided in the pot body 1100. By connecting and mounting the handle portion 200 through the panel 1200, the arrangement of the mounting port 900 is more flexible, and an inner space of the pot body 1100 also can be effectively utilized to protect the handle portion 200 during transportation, which is relatively convenient. The panel 1200 can be flush with an outer side wall of the air fryer, maintaining the aesthetic appearance of the air fryer.

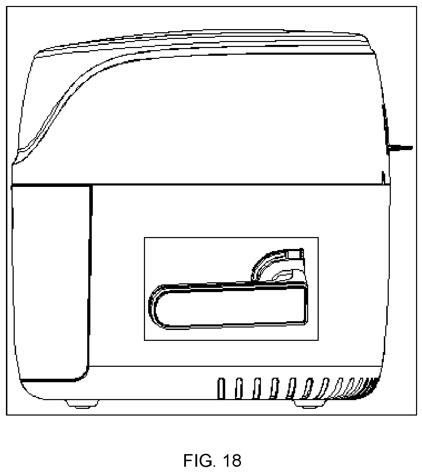

The present embodiment further provides an air fryer, including a body and the frying basket as described in the above embodiments, wherein a cooking cavity is provided in the body, and the frying basket is drawn out from a side wall of the body and placed into the cooking cavity. For such a drawer-type air fryer, as shown in FIG. 18, it is particularly necessary to disassemble the handle portion and place the handle portion separately during the transportation, such that the packaging volume of the air fryer can be reduced, and there is no need to specially design the packaging material, thus having low costs and strong practicality.

It should be noted that terms used herein are for the purpose of describing specific embodiments only and are not intended to limit exemplary embodiments according to the present disclosure. As used herein, the singular form is intended to include the plural form as well, unless clearly indicated otherwise in the context, and besides, it also should be understood that the terms "contain" and/or "include", when used in the description, specify the presence of features, steps, operations, devices, components, and/or combinations thereof.

Unless otherwise specified, relative arrangement of the components and steps, numerical expressions, and numerical values illustrated in these embodiments do not limit the scope of the present disclosure. Meanwhile, it should be understood that, for the convenience of description, dimensions of various parts shown in the accompanying drawings are not drawn according to the actual proportional relationship. Techniques, methods, and devices known to those of ordinary skill in the relevant art may not be discussed in detail, but the techniques, methods, and devices should be considered as part of granted specification, where appropriate. In all examples shown and discussed herein, any specific values should be construed as exemplary only and not as limiting. Therefore, other examples of exemplary embodiments may have different values. It should be noted that similar reference signs and letters represent similar items in the following accompanying drawings, therefore, once a certain item is defined in one accompanying drawing, it is not needed to be further discussed in subsequent accompanying drawings.

In the description of the present disclosure, it is to be noted that orientation or positional relations indicated by orientation terms such as "front, back, up, down, left, right", "transverse, longitudinal, vertical, horizontal", "top, bottom" are the orientation or positional relations shown based on the drawings, only for facilitating the description of the present disclosure and simplifying the description, and in the case that there is no opposite description, these orientation terms do not indicate or suggest that the related devices or elements must have a specific orientation or be constructed and operated in a particular orientation, therefore they should not be construed as limiting the scope of protection of the present disclosure; the orientation terms "inside, outside" refer to the inside and outside relative to the outline of each part itself.

For ease of description, spatial relative terms, such as "over", "above", "on an upper surface of...", "on top", and the like, may be used herein to describe spatial positional relationships between one device or feature and other devices or features as illustrated in the drawings. It will be understood that the spatial relative terms are intended to encompass different orientations in use or operation in addition to the orientation of the device depicted in the drawings. For example, if a device in the drawing is inverted, the device described as "above other devices or structures" or "over other devices or structures" would then be located "below other devices or structures" or "under other devices or structures". Accordingly, the exemplary term "above" can encompass two orientations of "above" and "below". The device also can be positioned in other different ways as well (rotated by 90 degrees or in other orientations), and the spatial relative description used herein is to be interpreted accordingly.

In addition, it should be noted that, terms such as "first" and "second" are used to define parts only for the convenience of distinguishing corresponding parts, and if not otherwise stated, the above words have no special meanings, and therefore cannot be construed as limiting the scope of protection of the present disclosure.

The frying basket assembly having a separated handle and the air fryer provided in the present disclosure are introduced in detail in the above. Specific examples are used herein to illustrate the principle and embodiments of the present disclosure. The description of the above embodiments is only used to help understand the method of the present disclosure and the core idea thereof; meanwhile, those of ordinary skill in the art could make changes to the specific embodiments and the application scope according to the idea of the present disclosure. To sum up, the contents of the present specification should not be construed as limitation to the present disclosure.

### Industrial Applicability

In the present disclosure, by means of the structural design, one of the handle and the frying basket is provided with the hook, and the other is provided with the snapping position, and the hook is clamped into the snapping position by means of the elastic force of the elastic member, thus realizing the fixed mounting of the handle. As the frying basket and the handle are of a split structure, during the packaging and transportation process, the handle can be placed in the frying basket assembly or in the gap of the packaging box, thus saving the packaging and transportation costs. When using, the user can firmly assemble the handle on the frying basket just by one simple "insertion" action, which assembly is quick and convenient, and the handle cannot be disassembled after the assembly, thus having strong practicality.

By making the frying basket and the handle in a split structure and providing the same with a detachable mounting structure, on the one hand, the handle can be directly placed in the frying basket during transportation without occupying the space of packaging box and without specifically designing the packaging material, and on the other hand, the assembly, maintenance, and cleaning are convenient; and

the hook is provided inside the handle, the hook has one end hinged to the handle, and the other end being a movable end, then the hook can be hooked with the snapping port, so as to fix the handle on the frying basket in a snap-fit manner, which operation is convenient and reliable.

## Claims

1. A frying basket assembly having a separated handle, the frying basket assembly (20) comprising a handle (1) and a frying basket (2), **characterized in that** the handle (1) comprises a mounting portion (3), the frying basket (2) is provided thereon with a mounting groove (5) corresponding to the mounting portion (3), one of the mounting portion (3) and the mounting groove (5) is provided with a hook (7), the other is provided with a snapping position (10) corresponding to the hook (7), the hook (7) is connected with an elastic member so as to make the hook (7) move towards a direction of the snapping position (10), and when the handle (1) is mounted on the frying basket (2) and reaches a final position, the hook (7) is clamped into the snapping position (10), to non-detachably fix the handle (1) on the frying basket (2).

2. The frying basket assembly having a separated handle according to claim 1, wherein the mounting portion (3) has an accommodation cavity (4), the hook (7) has a connecting end and a free end, wherein the connecting end is hinged in the accommodation cavity (4), and the free end extends out of the accommodation cavity (4) to face the snapping position (10).

3. The frying basket assembly having a separated handle according to claim 2, wherein the elastic member is a spring (6), the spring (6) has a first end abutting against an inner wall of the accommodation cavity (4), and a second end abutting against the hook (7),
preferably, a guiding groove (11) is provided in the accommodation cavity (4), and the first end of the spring (6) is limited in the guiding groove (11).

4. The frying basket assembly having a separated handle according to claim 2, wherein the mounting groove (5) is provided with a guiding slope (14), and when the mounting portion (3) is vertically slid, the free end of the hook (7) is gradually received in the accommodation cavity (4) under extrusion of the guiding slope (14).

5. The frying basket assembly having a separated handle according to claim 2, wherein the mounting groove (5) is a U-shaped groove, and the mounting portion (3) is inserted from a groove opening of the U-shaped groove, and slid downwards into the U-shaped groove,
preferably, a step surface (15) is provided at the groove opening of the U-shaped groove, a top end of the mounting portion (3) is provided with a blocking portion (16), and when the handle (1) is mounted on the frying basket (2) and reaches the final position, the blocking portion (16) covers the step surface (15).

6. The frying basket assembly having a separated handle according to claim 1, wherein two sides of the mounting portion (3) are provided with protrusions (12), the mounting groove (5) is provided with corresponding limiting grooves (13), and the protrusions (12) are limited in the limiting grooves (13) to prevent the mounting portion (3) from moving out of the mounting groove (5).

7. The frying basket assembly having a separated handle according to claim 1, wherein one of a bottom end of the mounting groove (5) and a bottom end of the mounting portion (3) is provided with a positioning groove (17), and the other is provided with a corresponding positioning post (18), and when the handle (1) is mounted on the frying basket (2) and reaches the final position, the positioning post (18) is clamped into the positioning groove (17).

8. The frying basket assembly having a separated handle according to claim 1, wherein a free end of the hook (7) has two hook tines, and when the handle (1) is mounted on the frying basket (2) and reaches the final position, the two hook tines are clamped into the snapping position (10).

9. A frying basket having a separated handle, comprising a frying basket body (100) and a handle portion (200), **characterized in that** the frying basket body (100) and the handle portion (200) are detachably connected to each other, and the frying basket body (100) has a space inside capable of accommodating the handle portion (200), the frying basket body (100) is provided thereon with a mounting port (900), one end of the handle portion (200) is provided with a mounting base (2100), and the mounting base (2100) fits and is embedded into the mounting port (900).

10. The frying basket having a separated handle according to claim 9, wherein the mounting base (2100) is provided thereon with a snap-fit structure for locking with the frying basket body (100) in a snap-fit manner when the mounting base (2100) fits and is embedded into the mounting port (900).

11. The frying basket having a separated handle according to claim 10, wherein the snap-fit structure comprises a hook (7), the hook (7) has one end hinged to the mounting base (2100), and the other end being a movable end, the elastic member (400) is mounted between the movable end and the mounting base (2100), the mounting port (900) is provided therein with a snapping port (800), and the movable end of the hook (7) extends out under action of the elastic member (400) to be clamped and locked with the snapping port (800),
preferably, a buckling plate (700) inclined towards the hook (7) is disposed inside the mounting port (900), and the snapping port (800) is formed between an inclined extending end of the buckling plate (700) and the frying basket body (100); and
preferably, the mounting base (2100) is provided with a through-hole (2400), and a space for inserting and moving an auxiliary tool (1000) is provided between the through-hole (2400) and the movable end of the hook (7), and
further preferably, the through-hole (2400) is blocked by a removable plug (300).

12. The frying basket having a separated handle according to claim 9, wherein the mounting port (900) is provided at one side edge of the frying basket body (100), and the mounting base (2100) of the handle portion (200) is slid into the mounting port (900) from top to bottom or from bottom to top.

13. The frying basket having a separated handle according to claim 9, wherein limiting grooves are provided on side walls at two sides of the mounting port (900), and limiting protrusions (2300) corresponding to the limiting grooves are provided at two sides of the mounting base (2100); or
the side walls at the two sides of the mounting port (900) are provided with the limiting protrusions (2300), and the two sides of the mounting base (2100) are provided with the limiting grooves corresponding to the limiting protrusions (2300), and when the mounting base (2100) is slid into the mounting port (900), the limiting protrusions (2300) are clamped into the limiting grooves.

14. The frying basket having a separated handle according to claim 9, wherein the frying basket body (100) comprises a pot body (1100) and a panel (1200) provided at one side of the pot body (1100), the mounting port (900) is provided on the panel (1200), and a space capable of accommodating the handle portion (200) is provided in the pot body (1100).

15. An air fryer, **characterized by** comprising a fryer body (21) and the frying basket assembly having a separated handle according to claim 1 or the frying basket having a separated handle according to claim 9, wherein the frying basket assembly or the frying basket enters or exits the fryer body (21) in a push-and-pull manner.
